# EUROPEAN PATENT APPLICATION

(11) **EP 2 081 388 A1**
(43) Date of publication of application: **22.07.2009**
(21) Application number: 08700767.0
(22) Date of filing: 11.01.2008
(51) Int. Cl.: H04N 7/32

(54) **A METHOD AND A DEVICE FOR INTRA FRAME PREDICTION ENCODING/DECODING**

(30) Priority: 11.01.2007 CN 200710007801
(71) Applicant: Huawei Technologies Co., Ltd., Shenzhen, Guangdong Province 518129 (CN)
(72) Inventor: XIONG, Lianhuan, Guangdong 518129 (CN)
(74) Representative: Körber, Martin Hans
(86) International application number: PCT/CN2008/070092
(87) International publication number: WO 2008/083633

(57) **Abstract**

Methods and devices of intra prediction encoding and decoding are described, so that the encoding performance of intra coding is better. A prediction encoding is performed on the same frame by using at least two intra prediction encoding modes, and information indicating the intra prediction encoding mode of each block is written into the encoded result, so as to encode different blocks by using the most appropriate modes. By using at least two intra prediction encoding modes, relevant indication information is written into the encoded result, so as to correctly perform the decoding. During decoding, the information of intra prediction encoding mode of each block of the same frame is firstly read, and then the block is decoded by using this mode. Each block is organized in a form of hierarchical tree, so as to obtain the optimal performance, and reduce the amount of the information indicating the intra prediction encoding mode of each block in the encoded result.

## Description

### FIELD OF THE TECHNOLOGY

The present invention relates to a video encoding and decoding field, and more particularly to methods and devices of intra prediction encoding and decoding.

### BACKGROUND

A video has a large amount of information, and during video encoding, if an encoder independently performs intra encoding without depending on the previous encoded frame, the decoder may directly decode the frame without knowing the previous decoded frame. However, in this method, compression efficiency of the intra encoding is quite low, and the amount of the encoded information is extremely large. In order to improve the encoding compression efficiency, during the intra encoding, the prediction is performed on the current block by using the peripheral information; or, for an inter prediction frame, particularly a motion compensated frame, the intra coding of the current frame may be performed by using the inter-encoded blocks as the prediction reference of the current encoded frame. If one frame only uses the intra encoding, the frame may serve as a starting point of a video sequence, for example, an instantaneous decoding refresh (IDR) frame in H.264/advanced video coding (AVC) standard.

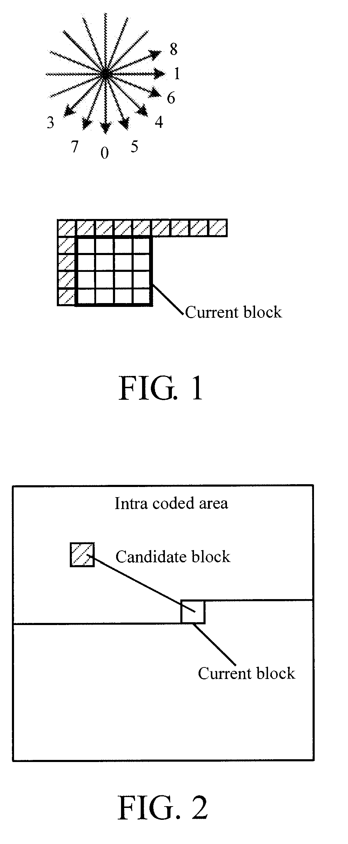

The H.264/AVC intra prediction encoding technique is briefly introduced as below. The main objective of the H.264/AVC intra encoding is reducing the space redundancy of the frame. In order to improve the efficiency of the H.264/AVC intra frame encoding, the space dependency of the neighboring macroblocks is fully utilized of the frame, because the neighboring macroblocks usually have the similar characteristics. Therefore, when a macroblock is encoded, the prediction is performed according to the neighboring macroblocks, and then the difference between the predicted value and the actual value is encoded. Referring to FIG 1, it is a schematic view of the method of H.264/AVC intra prediction encoding in the prior art. It may be known from FIG 1 that compared with the technique of directly encoding the frame, this method may greatly reduce the bit rate.

The H.264/AVC supports the intra prediction on the basis of 4×4, 8×8, and 16×16 blocks, and provides various prediction modes including one DC prediction mode and several directional prediction modes. Through this intra prediction, the space redundancy of the picture is greatly reduced, and the encoding compression efficiency is improved.

In addition to the method of H.264/AVC intra prediction encoding, in the prior art, a method of H.264/AVC displacement intra prediction (DIP) encoding is further provided. In this method, the inter prediction with the variable size of the block in the H.264/AVC is applied to the H.264/AVC intra prediction. The current block may refer to the previous encoded area by using a displacement vector labeling method. In other words, when the current block is being encoded, firstly a block similar to the current block is searched in the encoded area and chosen as a candidate block, and the candidate block is indicated through the displacement vector labeling method, which is used to identify the position difference between the current block and the candidate block. Because the candidate block is decoded before the current block, the decoder can decode the current block according to the decoded information of the candidate block, the displacement vector, and other information. Referring to FIG 2, it is a schematic view of a method of DIP encoding in the prior art. The method as shown in FIG 2 is usually applied to the macroblock level.

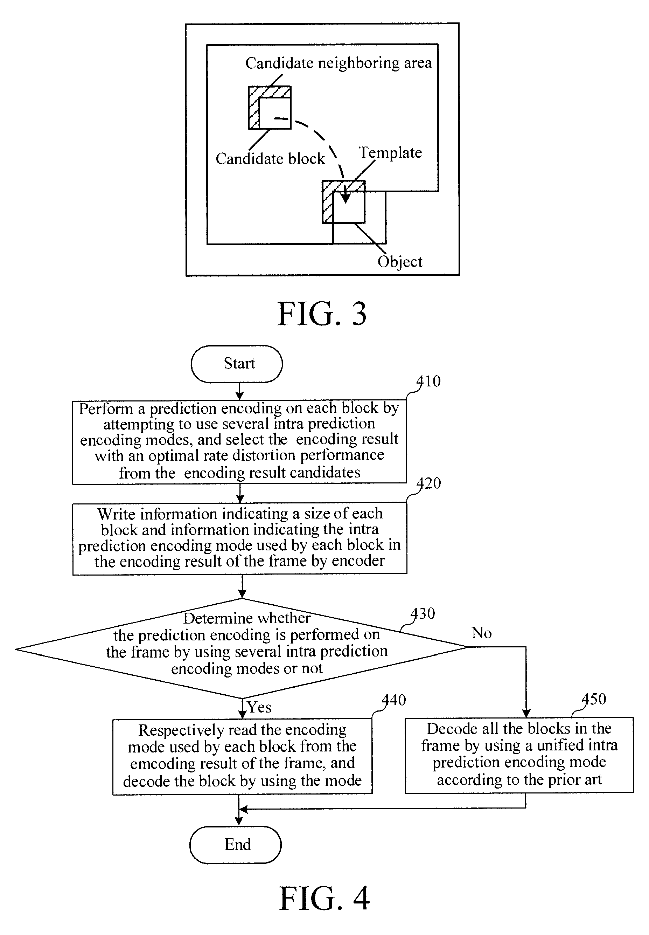

In the prior art, a method of intra prediction encoding by using template matching is further provided. Referring to FIG 3, it is a schematic view of the method of template matching intra prediction encoding in the prior art. In the method, self-similar area of prediction picture area are exploited for prediction by using the template matching, in which the prediction picture area is also referred to as an object area. Particularly, the neighboring area of the prediction picture area serves as a template, the area having pixels most similar to those of the template is iteratively searched in the previous encoded area, the most similar area is referred to as a candidate neighboring area, and the previous encoded area is also referred to as the searching area. The decoder may found the candidate neighboring area from the searching area, and because the pixels of candidate neighboring area are similar to those of the neighboring area of the object area, the decoder may obtain the prediction of the object area without any other additional header information. The template matching technique may serve as an additional mode of the H.264/AVC, and is applicable to the intra 4×4 block or the intra 8×8 prediction block.

During the process of implementing the present invention, inventors find that the prior art at least has the problems as follows.

The H.264/AVC intra prediction encoding, the DIP encoding, and the template matching intra prediction encoding have respective features, and are respectively applicable to a part of the scenarios. Different intra prediction techniques are applicable to the different local areas in a video picture. The H.264/AVC intra prediction technique is applicable to an area where the current block and neighboring pixel s ha ve a similar direction of extend texture structure. The DIP technique is applicable to an area which has the repeated structure. The template matching intra prediction technique is applicable to an area where the reference neighboring area has similar structures. It may be known that the encoding performance obtained by using one intra prediction encoding method is not optimal.

### SUMMARY

Various embodiments of the present invention provide methods and devices of intra prediction encoding and decoding which make coding performance better.

In order to solve the above technical problem, one embodiment of the present invention provides a method of intra prediction encoding, which includes the steps as follows. A prediction encoding is performed on blocks in a frame by using at least two intra prediction encoding modes. Information indicating the intra prediction encoding mode of each block of the frame is written into an encoded result of the frame. In the encoded result, each block uses only one intra prediction encoding mode, and at least two encoding modes are used in the encoded result of the frame.

One embodiment of the present invention provides a method of intra prediction decoding, which includes the steps as follows. Information indicating an intra prediction encoding mode of each block of a frame is read from an encoded result of the frame, and the block is decoded by using the mode.

One embodiments of the present invention provides a device of intra prediction encoding, which includes a unit adapted to perform a prediction encoding on blocks in a frame by using at least two intra prediction encoding modes; and a unit adapted to write information indicating the intra prediction encoding mode of each block of the frame into an encoded result of the frame. In the encoded result, each block of the frame uses only one intra prediction encoding mode, and at least two encoding modes are used in the encoded result of the frame.

One embodiments of the present invention provides a device of intra prediction decoding, which includes at least two decoders, each decoder adapted to decode according to one intra prediction encoding mode; and a first reading unit adapted to read information indicating an intra prediction encoding mode of each block in a frame from an encoded result of the frame, and indicate the decoder corresponding to the intra prediction encoding mode to decode the block.

As compared with the prior art, the present invention has beneficial effects as follows.

The prediction encoding is performed on the same frame by using at least two intra prediction encoding modes, and the information indicating the intra prediction encoding mode used by each block is written into the encoded result, so that different blocks may be encoded by using the most appropriate modes. As compared with the technical solution in the prior art that the intra encoding is performed on all the blocks of the frame by using only one mode, the present invention obtains the better coding performance.

If some frames in one media stream use at least two intra prediction encoding modes, but some frames in the media stream use only one intra prediction encoding mode, information indicating that at least two intra prediction encoding modes are used should be written into the encoded result of the former one, so as to correctly perform the decoding process.

Under a situation that at least two intra prediction encoding modes are used, during decoding process, the intra prediction encoding mode used by each block of the same frame is firstly read, and then the block is decoded by using this mode, so each block is correctly decoded.

Information indicating the size of each block is written into the encoded result, so that each block of the same frame is not limited to a fixed dividing pattern, and the better coding performance by using different intra prediction encoding modes is obtained.

The prediction encoding is performed on each block by attempting to use several intra prediction encoding modes, the results by using several intra prediction encoding modes are obtained as candidates, and then an optimal candidate is selected as a final encoding result according to a preset performance measurement, for example, a rate distortion performance, so that the final encoding result has an optimal performance.

The blocks of the frame are organized in a form of hierarchical tree, so as to obtain the optimal performance, and reduce the amount of information indicating the intra prediction encoding mode used by each block in the encoded result.

The technical solution of the present invention may be applied in a space domain frame or a frequency domain frame, and the frequency domain includes the frequency domains generated by various transforms, such as a discrete cosine transform (DCT), a discrete Fourier transformation (DFT), and a wavelet transform. Therefore, embodiments of the present invention have a wide application field.

### BRIEF DESCRIPTION OF THE DRAWINGS

FIG 1 is a schematic view of a method of H.264/AVC intra prediction encoding in the prior art;

FIG 2 is a schematic view of a method of DIP encoding in the prior art;

FIG 3 is a schematic view of a method of intra prediction encoding by using template matching in the prior art;

FIG 4 is a flow chart of a method of intra prediction encoding and decoding according to a first embodiment of the present invention;

FIG 5 is a schematic view of dividing a macroblock in the method of intra prediction encoding and decoding according to the first embodiment of the present invention;

FIG 6 is a flow chart of a decoding example in the method of intra prediction encoding and decoding according to the first embodiment of the present invention;

FIG 7 is a schematic view of a rate distortion performance gain brought by the method of intra prediction encoding and decoding according to the first embodiment of the present invention;

FIG 8 is a structural view of a device of intra prediction encoding according to a second embodiment of the present invention; and

FIG 9 is a structural view of a device of intra prediction decoding according to the second embodiment of the present invention.

### DETAILED DESCRIPTION

In order to have a further understanding of the objective, technical solution and advantage of the present invention, a detailed description of the present invention is given as follows with accompanying drawings.

In each embodiment of the present invention, a prediction encoding is performed on the same frame by using at least two intra prediction encoding modes, and information indicating the intra prediction encoding mode used by each block is written into an encoded result, so as to encode different blocks by using the most appropriate modes. As compared with the technical solution in the prior art that the intra encoding is performed on all the blocks of the frame by using only one mode, the technical solution of the present invention obtains a better coding performance.

A first embodiment of the present invention is described as follows, and referring to FIG 4, the first embodiment of the present invention relates to a method of intra prediction encoding and decoding.

In Step 410, an encoder performs a prediction encoding on each block of a frame by attempting to use all available intra prediction encoding modes to obtain corresponding encoding result candidates respectively, and the candidate with the optimal performance is selected from the candidates to serve as a final encoding result of the block. The manner is equivalent to encoding the different blocks by using the most appropriate modes. As compared with the technical solution in the prior art that the intra encoding is performed on all the blocks of the frame by using only one mode, this embodiment obtains the better encoding performance. Here, the performance measurement may be a rate distortion performance. The candidates of intra prediction encoding mode may be an H.264/AVC directional prediction mode, a DIP mode and a template matching prediction mode etc.

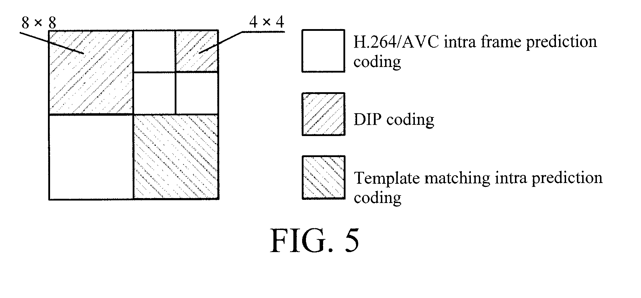

Particularly, the encoded block may be a basic encoding unit, that is, macroblock, and may be sub-blocks divided from the macroblock. After several modes of prediction encoding are performed on each block, and the encoding result with the optimal performance measurement is selected as the final encoding result, according to the intra prediction encoding mode corresponding to the final encoding result of each block, the blocks are organized in a form of hierarchical tree, so as to obtain the optimal performance and reduce the amount of information indicating the intra prediction encoding mode used by each block in the encoded result. For example, for a 16×16 macroblock, one 16×6 macroblock may be divided into four 8×8 sub-blocks, and one 8×8 sub-block may also be further divided into four 4×4 sub-blocks. The encoder respectively encodes the 16×16 macroblock, each 8×8 sub-block in the macroblock, and each 4×4 sub-block in the macroblock by using several prediction modes, so as to select the encoding mode combination with the optimal rate distortion performance from the candidate encoding result combinations to serve as the final encoding result of the macroblock, thereby organizing the macroblock in the form of hierarchical tree. FIG 5 is schematic view of dividing a macroblock in the method of intra prediction encoding and decoding according to the first embodiment of the present invention. The example of the encoding result combinations of the 16×16 macroblock is shown in FIG 5, the final encoding result of the 8×8 sub-block on the top left corner is the encoding result using the DIP mode, the final encoding result of the 8×8 sub-block on the bottom left corner is the encoding result using the H.264/AVC directional prediction mode, the final encoding result of the 8×8 sub-block on the bottom right corner is the encoding result using the template matching intra prediction mode, the final encoding result of the 4×4 sub-block on the top right corner is the encoding result using the DIP mode, and the optimal encoding results of the remaining three 4×4 sub-blocks are all the encoding results of the H.264/AVC directional prediction mode.

Definitely, here the macroblock is not always the 16×16 macroblock, and may be a marcoblock of other formats, for example, a 32×32 macroblock. Similarly, the sub-block is not always organized in a form of quartered hierarchical level, and may also be organized in other forms, for example, a form of dimidiate hierarchical level. In the form of dimidiate hierarchical level, one 16×16 macroblock includes two 8×16 sub-blocks or two 16×8 sub-blocks.

In Step 410, the detaisl of the prediction encoding modes may be obtained with reference to the prior art. For example, for the H.264/AVC directional prediction encoding mode, please refer to ITU-T Rec. H.264, Advanced Video Coding for Generic Audiovisual Services, 2005; for the DIP encoding mode, please refer to S.-L. Yu and C. Chrysafis, New Intra Prediction using Intra-Macroblock Motion Compensation, JVT meeting Fairfax, doc JVT-C151, May 2002; and for the template matching intra prediction encoding mode, please refer to T.K. Tan, C.S. Boon, and Y Suzuki, Intra Prediction by Template Matching, ICIP 2006.

It should be noted that when the DIP is performed, a displacement vector is encoded by using the method similar to the inter frame motion compensation and by adopting a motion vector encoding method in an H.264/AVC standard.

In addition, in this embodiment, a scanning sequence of the sub-blocks of the macroblock is the same as the scanning sequence of the sub-blocks of the H.264/AVC P_8x8 macroblock type.

Next, in Step 420, the information indicating the size of each block and the information indicating the intra prediction encoding mode used by each block are written into the encoded result of the frame. If each block of a frame includes the information indicating the size of the block, the blocks of the frame are not limited to a fixed division pattern, thereby facilitating the obtaining of the better encoding performance by using different intra prediction encoding modes.

Particularly, if the prediction encoding is performed on each block of the frame by using at least two different intra prediction encoding modes, and each mode is applied to one or more blocks of the frame, information indicating that the prediction encoding is performed on the frame by using several intra prediction encoding modes is written in the encoded result of the frame, so that even the technical solution of the present invention may coexist with the technical solution in the prior art that the intra frame encoding is performed on all the blocks of the frame by using only one mode, and the decoding end may perform the correct decoding by parsing the encoded result.

If a block, for example, a macroblock or a sub-block, corresponding to a root node of one branch of the hierarchical tree, uses only one intra prediction encoding mode, that is, the optimal encoding method of all the sub-blocks in the macroblock or the sub-block is the same intra prediction encoding mode, or the macroblock or the sub-block is the block corresponding to a leaf node of one branch, the information indicating the size of the block and the information indicating the intra prediction encoding mode used by the block are written into the encoded result of the frame; otherwise, each sub-branch of the branch is processed.

It should be noted that for the DIP encoding mode, the displacement vector is required to be encoded.

A storage structure of the frame indicated by a syntax table is shown in Table 1 as follows. The type of macroblocks, on which the prediction encoding is performed by using several frame prediction encoding modes, is indicated by I EXT, and NumMbPart(I_EXT)=1.

In the Table 1, ext_intra_pred_flag indicates whether the prediction encoding is performed on the frame by using several intra prediction encoding modes or not, and ext_intra_pred_flag being equal to 1 indicates that the prediction encoding is performed by using several intra prediction encoding modes.

ext_16x16_pred_flag being equal to 1 indicates that the macroblock using the intra prediction is 16x16.

ext_16x16_pred_flag being equal to 0 indicates that the macroblock is further divided into 8x8.

ext_16x16_pred_mode indicates the intra prediction encoding mode of the 16x16 macroblock.

ext_8x8_pred_flag[ ] being equal to 1 indicates that the prediction is performed according to the 8x8 division, and ext_8x8_pred_flag[] being equal to 0 indicates that the sub-block is further divided into 4x4 sub-blocks.

ext_8x8_pred_mode[ ] indicates the intra prediction encoding mode of each 8x8 sub-block.

ext_4x4_pred_mode[ ][ ] indicates the intra prediction encoding mode of each 4x4 sub-block.

dvd[ ][ ][ ] indicates the displacement vector in the DIP encoding mode.

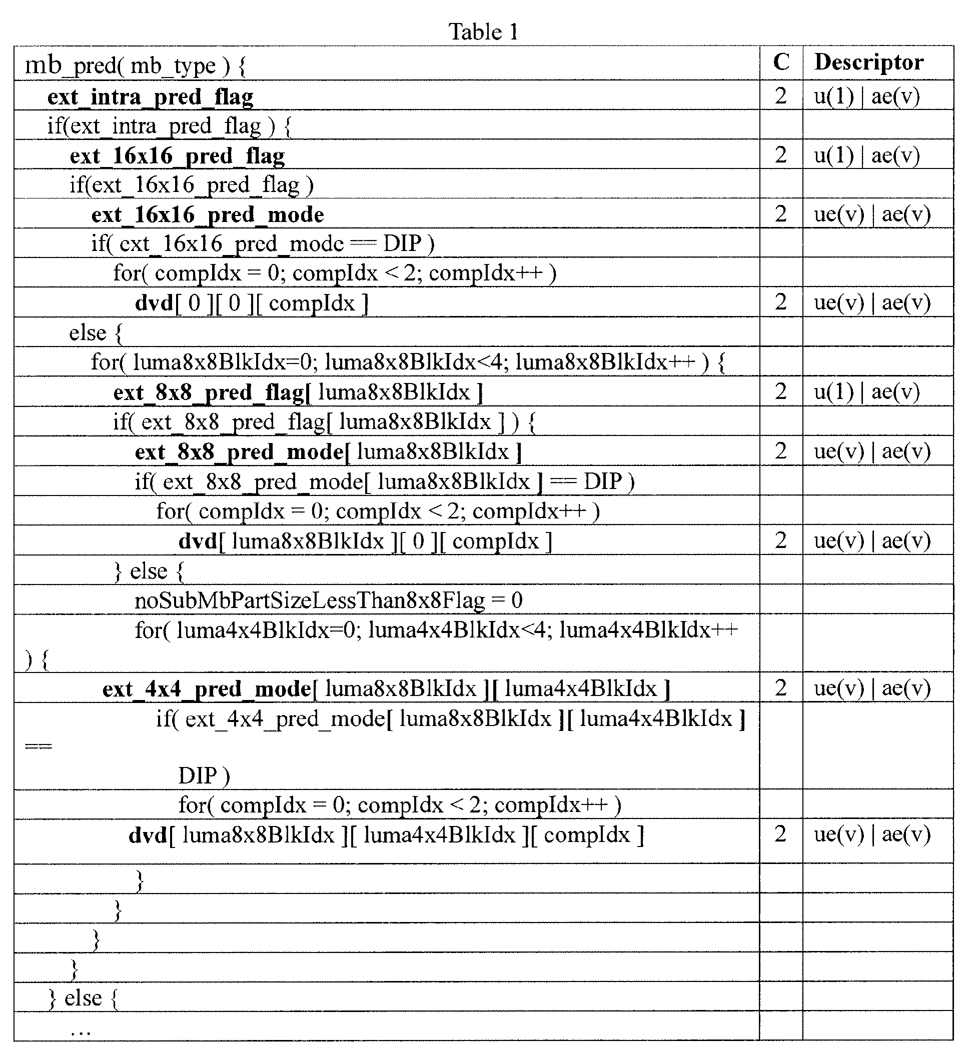

In addition, ae(v) is a syntax element encoded by a context-based adaptive binary arithmetic code.

u( n ) is n bits of unsigned integers. In the syntax table, if n is 'v', a bit number thereof is determined by other syntax element values. A parsing process is defined by the return value of function read_bits(n), and the return value is indicated by a high-to-low order binary value.

ue( v ) is a unsigned integer syntax element encoded by using an exponential-Golomb code.

Next, in Step 430, the decoder firstly determines whether the prediction encoding is performed on the frame by using several intra prediction encoding modes or not. If information indicating that the prediction encoding is performed on the frame by using at least two intra prediction encoding modes is read from the encoded result of the frame, the procedure proceeds to Step 440; otherwise, the procedure proceeds to Step 450, in which all the blocks of the frame are decoded by using a unified intra prediction encoding mode according to the prior art.

In Step 440, the decoder reads the encoded result of the frame, and searches for the information indicating the size of the block in the encoded result one by one, and performs the decoding according to the information indicating the size of the block and the information indicating the intra prediction encoding mode used by the block. The blocks of the frame are organized in the form of hierarchical tree. If the information indicating the size of the block is read from the encoded result of the frame, and the block includes the macroblocks or the sub-blocks, it indicates that the block with the size adopts the same intra prediction encoding mode. The decoder further reads the information indicating the intra prediction encoding mode used by the block, and decodes the block with the size by using this mode.

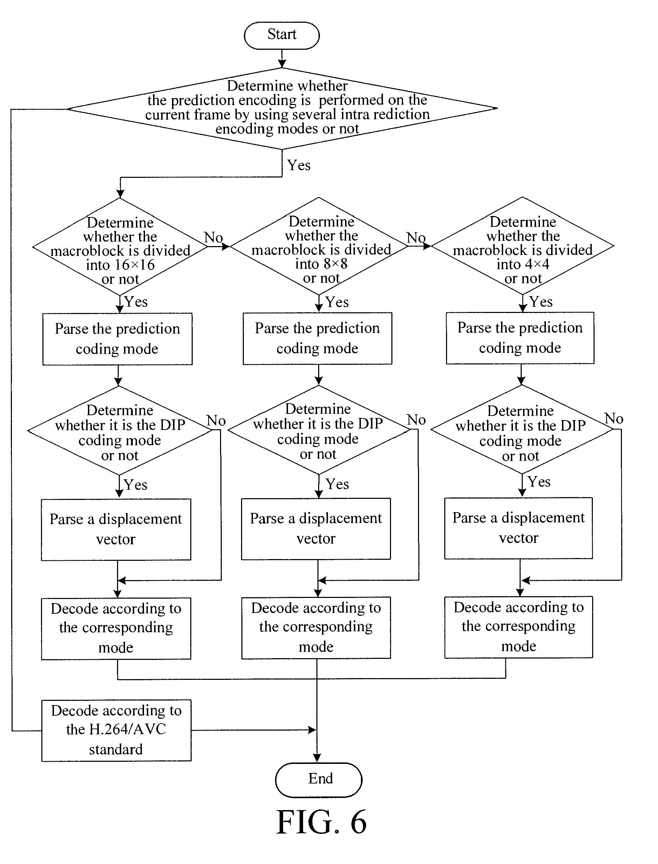

An example is given according to the encoding structure of Table 1 as follows, and referring to FIG 6, it is a flow chart of a decoding example in the method of intra prediction encoding and decoding according to the first embodiment of the present invention. According to an ext_intra_pred_flag flag bit obtained by parsing, the decoder firstly determines whether the prediction encoding is performed on the current encoded stream by using several intra prediction encoding modes; and if the prediction encoding is not performed on the current encoded stream by using several intra prediction encoding modes, all the blocks of the frame are decoded by using the unified intra frame prediction encoding mode according to the prior art, for example, according to the H.264/AVC standard; and if the prediction encoding is performed on the current encoded stream by using several intra prediction encoding modes, the current macroblock division situation of the intra frame is further determined according to the ext_16x16_pred_flag flag bit.

If the ext_16x16_pred_flag is equal to 1, it indicates that the macroblock is divided into 16×16, the encoding mode of the current block is obtained by parsing the ext_16x16-pred_mode, and the 16×16 macroblock is decoded according to the decoding mode corresponding to the encoding mode. If the encoding mode of the current block is the DIP encoding mode, the displacement vector dvd is parsed from the encoded stream, and then the block is decoded by using the corresponding decoding method. If the ext_16x16_pred_flag is equal to 0, it indicates that the 16×16 macroblock is divided into 8×8 blocks, and thus each 8×8 block of the macroblock is further parsed.

For each 8×8 block, according to the ext_8x8_pred_flag, if the ext_8x8_pred_flag is equal to 1, the prediction encoding mode ext_8x8_pred_mode of the 8×8 block in the encoded stream is parsed, and the corresponding decoding method is selected according to the encoding mode, so as to perform the decoding. If the current block encoding mode is the DIP encoding mode, the displacement vector dvd of each 8x8 block is parsed from the encoded stream, and then the decoding is performed by using the corresponding decoding method. If the ext_8x8_pred_flag is equal to 0, it indicates that the current block is further divided into 4×4 sub-blocks, and the prediction encoding mode ext_4x4_pred_mode of each 4×4 block is parsed.

For each 4×4 block, the prediction encoding mode ext_4x4_pred_mode is parsed; the corresponding method of decoding is selected according to the encoding mode, so as to perform the decoding. If the encoding mode of the current block is the DIP encoding mode, the displacement vector dvd of each 4×4 block is parsed from the encoded stream, and then the decoding is performed by using the corresponding method of decoding.

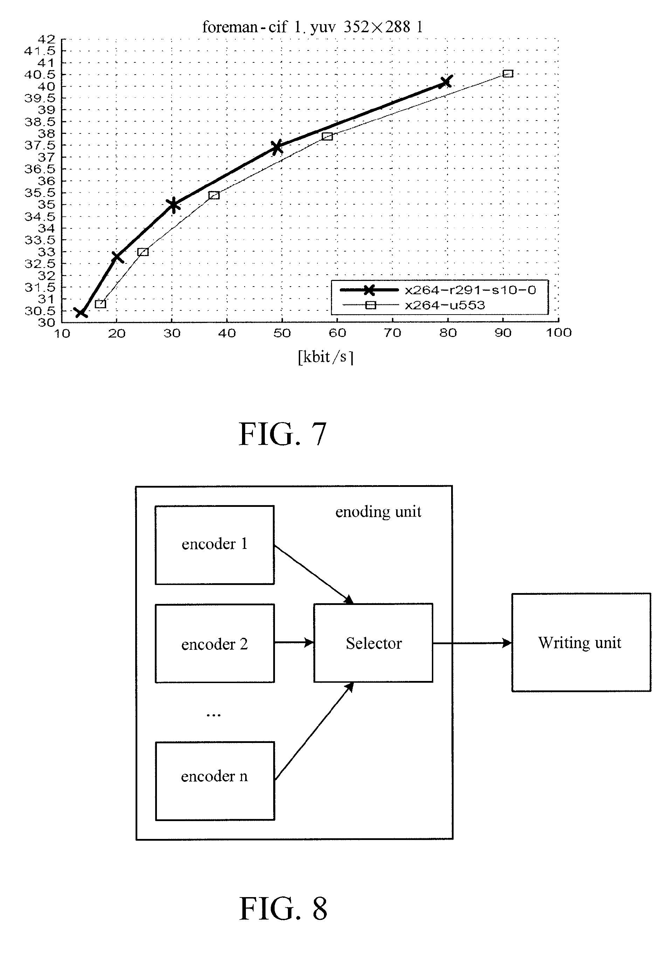

FIG 7 shows the rate distortion performance gain brought by the method of intra prediction encoding and decoding according to the embodiment of the present invention.

It should be noted that the frame in this implementation may be the frame of a space domain or a frequency domain, the frequency domain includes the frequency domains generated by various transforms, for example, a DCT, a DFT, and a wavelet transform etc. Therefore, the present invention has a wide application field.

A second embodiment of the present invention relates to a device of intra prediction encoding, and referring to FIG 8, it is a structural view of the device of intra prediction encoding according to the second embodiment of the present invention. The device of intra prediction encoding of this embodiment includes an encoding unit adapted to perform a prediction encoding on a frame by using at least two intra prediction encoding modes, and each mode is applied to at least one block of the frame. The prediction encoding is performed by using several intra prediction encoding modes, so as to encode the different blocks by using the most appropriate modes. As compared with the technical solution in the prior art that the intra encoding is performed on all the blocks of the frame by using only one mode, the encoding device of this embodiment obtains the better encoding performance. The encoding unit further includes at least two encoders, each of the encoders adapted to perform the prediction encoding on each block by using one intra prediction encoding mode, and a selector adapted to select a encoding result with the optimal rate distortion performance from the encoding result candidates output from the encoders to serve as a final encoding result of the block, so that the final encoding result has the optimal performance. The device of intra prediction encoding further includes a writing unit adapted to write information indicating the intra prediction encoding mode used by each block in the frame and information indicating the size of each block of the frame into the encoded result of the frame. By writing the information indicating the size of each block into the encoded result, the blocks of a frame may be not limited to a fixed dividing pattern, thus obtaining a better encoding performance by using the different intra prediction encoding modes. If some frames in one media stream use at least two intra prediction encoding modes, but some other frames in the media stream use only one intra prediction encoding mode, when the prediction encoding is performed on one frame by using at least two intra prediction encoding modes, the writing unit writes the information indicating that the prediction encoding is performed on the frame by using at least two intra prediction encoding modes into the encoded result of the frame, so as to correctly perform the decoding. The frame may be a space domain frame or a frequency domain frame, and the performance measurement may be the rate distortion performance, and the intra prediction encoding modes at least include a directional prediction mode, a DIP mode, and a template matching prediction mode.

In addition, the writing unit may organize each block in a form of hierarchical tree, so as to obtain the optimal performance, and reduce the amount of the information indicating the intra prediction encoding mode used by each block in the encoded result.

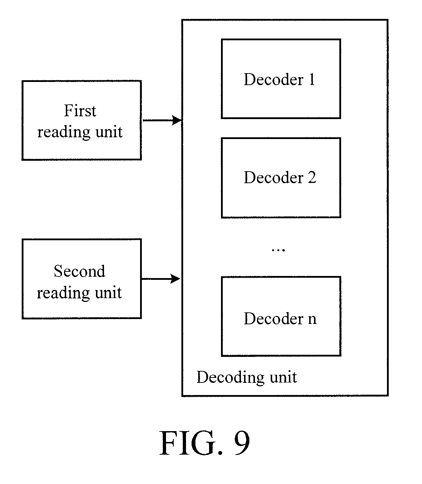

A third embodiment of the present invention relates to a device of intra prediction decoding, and referring to FIG 9, it is a structural view of a device of intra prediction decoding according to the third embodiment of the present invention. The device of intra prediction decoding of this embodiment includes a decoding unit, a first reading unit, and a second reading unit.

The decoding unit includes at least two decoders, each decoder adapted to decode according to one intra prediction encoding mode.

The first reading unit is adapted to read information indicating an intra prediction encoding mode used by each block of a frame from an encoded result of the frame, and indicate the decoder corresponding to the intra prediction encoding mode to decode the block.

The second reading unit is adapted to attempt to read information indicating that prediction encoding is performed on the frame by using at least two intra prediction encoding modes from the encoded result of the frame, and indicate the first reading unit and each decoder to respectively decode each block of the frame, if the information indicating that the prediction encoding is performed on the frame by using the at least two intra prediction encoding modes is read; otherwise, indicate one of the decoders to decode all the blocks of the frame by using a unified intra prediction encoding mode.

Similarly, the frame is a frame of a space domain or a frequency domain, and the frequency domain includes the frequency domains generated by various transforms, for example, a DCT, a DFT, and a wavelet transform etc. Therefore, the present invention has a wide application field.

The intra prediction encoding modes at least include a directional prediction mode, a DIP mode, and a template matching prediction mode.

It should be noted that the units in the embodiments of the two devices are logic units, and during practical application, the units may have different physical realizing forms.

To sum up, in each embodiment of the present invention, the prediction encoding is performed on the same frame by using at least two intra prediction encoding modes, and the information indicating the intra prediction encoding mode used by each block is written into the encoded result, so as to encode the different blocks by using the most appropriate modes. As compared with the technical solution in the prior art that the intra encoding is performed on all the blocks of the frame by using only one mode, the present invention obtains the better encoding performance.

If some frames in one media stream use at least two intra prediction encoding modes, but some other frames in the media stream use only one intra prediction encoding mode, the information indicating that at least two intra prediction encoding modes are used is written into the encoded result of the former one, so as to correctly perform the decoding.

Under a situation that at least two intra prediction encoding modes are used, during decoding, the intra prediction encoding mode used by each block of the same frame is firstly read, and then the block is decoded by using the mode, so each block is correctly decoded.

The information indicating the size of each block is written into the encoded result, so that blocks of the same frame are not limited to the fixed dividing pattern, thereby obtaining better encoding performance by using the different intra prediction encoding modes.

The prediction encoding is performed on each block by attempting to use several intra prediction encoding modes, several encoding result candidates are obtained, and then according to a preset performance measurement, for example, the rate distortion performance, the optimal encoding result candidate is selected as the final encoding result, so that the final encoding result has the optimal performance.

Each block is organized in the form of hierarchical tree, so as to obtain the optimal performance, and reduce the amount of the information indicating the intra prediction encoding mode used by each block in the encoding result.

The technical solution of the present invention may be applied to the frame of a space domain or the frame of a frequency domain, and the frequency domain includes the frequency domains generated by various transforms, for example, the DCT, the DFT, and the wavelet transform etc. Therefore, the present invention has a wide application field.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method of intra prediction encoding, **characterized by** comprising the steps of:
performing a prediction encoding on blocks in a frame by using at least two intra prediction encoding modes; and
writing information indicating the intra prediction encoding mode of each block of the frame to an encoded result of the frame, wherein each block of the frame was encoded by using the alternative of said at least two intra prediction encoding modes .

2. The method of intra prediction encoding according to claim 1, **characterized in that** the method further comprises the step of:
writing information indicating that the prediction encoding is performed by using at least two intra prediction encoding modes into the encoded result of the frame.

3. The method of intra prediction encoding according to claim 1, **characterized in that** the method further comprises the step of:
writing information indicating the size of each block into the encoded result of the frame.

4. The method of intra prediction encoding according to claim 1, **characterized in that** the step of performing the prediction encoding on blocks in a frame by using at least two intra prediction encoding modes comprises the steps of:
respectively performing the prediction encoding on each block of the frame by attempting to use all the available intra prediction encoding modes;
obtaining at least two encoding result candidates of the block;
selecting a encoding result with an optimal performance measurement from the encoding result candidates as a final encoding result of the block.

5. The method of intra prediction encoding according to claim 4, **characterized in that** the performance measurement is a rate distortion performance.

6. The method of intra prediction encoding according to any one of claims 1 to 5, **characterized in that** the intra prediction encoding modes comprise:
a directional prediction mode, a displacement intra prediction mode, and a template matching prediction mode.

7. The method of intra prediction encoding according to any one of claims 1 to 5, **characterized in that** the frame is a space domain frame or a frequency domain frame.

8. The method of intra prediction encoding according to any one of claims 1 to 5, **characterized in that** the blocks are organized in a form of hierarchical tree; and
if the block corresponding to a root node of one branch of the hierarchical tree is encoded by using only one intra prediction encoding mode, the information indicating the size of the block and the information indicating the intra prediction encoding mode of the block are written into the encoded result of the frame; otherwise, each sub-branch of the branch is further processed.

9. A method of intra prediction decoding, **characterized by** comprising the steps of:
reading information indicating an intra prediction encoding mode of each block of a frame from an encoded result of the frame, wherein each block of the frame was encoded by using the alternative of at least two intra prediction encoding modes;
decoding each block by using the decoding mode corresponding to the intra prediction encoding mode indicated by the information.

10. The method of intra frame prediction decoding according to claim 9, **characterized in that** the method further comprises the steps of:
if information indicating that a prediction encoding is performed on the frame by using at least two intra prediction encoding modes is read from the encoded result of the frame, respectively decoding each block of the frame by using the decoding mode corresponding to the intra prediction encoding mode; otherwise, decoding all the blocks of the frame by using a unified intra prediction decoding mode.

11. The method of intra prediction decoding according to claim 9, **characterized in that** the blocks are organized in a form of a hierarchical tree; and
if information indicating the size of the block is read from the encoded result of the frame, information indicating the intra prediction encoding mode of the block is further read, and the block with the size is decoded by using the decoding mode corresponding to the intra prediction encoding mode.

12. The method of intra prediction decoding according to claim 9, **characterized in that** the intra prediction encoding modes comprise:
a directional prediction mode, a displacement intra prediction mode, and a template matching prediction mode.

13. The method of intra prediction decoding according to claim 9, **characterized in that** the frame is a space domain frame or a frequency domain frame.

14. A device of intra frame prediction encoding, **characterized by** comprising:
a unit adapted to perform a prediction encoding on blocks in a frame by using at least two intra prediction encoding modes; and
a unit adapted to write information indicating the intra prediction encoding mode of each block of the frame into an encoded result of the frame, wherein each block of the frame was encoded by using the alternative of said at least two intra prediction encoding modes.

15. The device of intra prediction encoding according to claim 14, **characterized in that** the device of intra frame prediction encoding further comprise: a unit adapted to write information indicating that the prediction encoding is performed on the frame by using the at least two intra prediction encoding modes into the encoded result of the frame.

16. The device of intra prediction encoding according to claim 14, **characterized in that** the device of intra frame prediction encoding further comprise: a unit adapted to write information indicating the size of each block into the encoded result of the frame.

17. The device of intra prediction encoding according to claim 14, **characterized in that** the unit adapted to perform the prediction encoding on blocks in a frame by using at least two intra prediction encoding modes further comprises:
at least two encoders, each encoder adapted to perform the prediction encoding on each block by using one intra prediction encoding mode; and
a selector adapted to select a encoding result with an optimal rate distortion performance from the encoding result candidates output from the encoders as a final encoding result of the block.

18. A device of intra frame prediction decoding, **characterized by** comprising:
at least two decoders, each decoder adapted to decode according to one intra prediction encoding mode; and
a first reading unit adapted to read information indicating an intra prediction encoding mode of each block in a frame from an encoded result of the frame, and indicate the decoder corresponding to the intra prediction encoding mode to decode the block.

19. The device of intra prediction decoding according to claim 18, **characterized in that** the device of intra frame prediction decoding further comprise:
a second reading unit adapted to attempt to read information indicating that a prediction encoding is performed on the frame by using at least two intra prediction encoding modes from the encoded result of the frame; if the information indicating that the prediction encoding is performed on the frame by using at least two intra prediction encoding modes is read, indicate the first reading unit and the decoders to respectively decode each block of the frame; otherwise, indicate one of the decoders to decode all the blocks of the frame by using a unified intra prediction decoding mode.
